# EUROPÄISCHE PATENTANMELDUNG

(11) **EP 1 647 778 A1**
(43) Veröffentlichungstag der Anmeldung: **19.04.2006**
(21) Anmeldenummer: 04105121.0
(22) Anmeldetag: 18.10.2004
(51) Int. Cl.: F24F 5/00, E04B 2/88, E06B 7/10, F24D 5/00

(54) **Konstruktionselement zum Klimatisieren von Gebäuden**

(71) Anmelder: Elco S.A., 2339 Luxembourg (LU)
(72) Erfinder: Gläsener, Lutwin, 54441 Kirf (DE); Backes, Jörg, 66809 Nalbach (DE)
(74) Vertreter: Beissel, Jean

(57) **Zusammenfassung**

Ein Konstruktionselement (10) zum Klimatisieren von Gebäuden umfasst ein Fenstermodul, das einer bestehenden Fensterfläche (30) des Gebäudes derart zugeordnet werden kann, dass bezüglich der Fensterfläche eine zweite Gebäudehülle ausgebildet wird, wobei zwischen der Fensterfläche und dem Fenstermodul ein Zwischenraum (32) ausgebildet wird, und mindestens eine Klimatisierungsvorrichtung (18,20) zum Beheizen und/oder Kühlen des zwischen der Fensterfläche und dem Fenstermodul ausgebildeten Zwischenraums. Erfindungsgemäß ist das Fenstermodul als Rahmenelement (14) ausgestaltet, das einer Fensternische des Gebäudes von innen zugeordnet werden kann, und die Klimatisierungsvorrichtung ist in dem Rahmenelement angeordnet.

## Beschreibung

### Einleitung

Die vorliegende Erfindung betrifft allgemein eine Vorrichtung zur klimatechnischen Sanierung von Gebäuden. Die vorliegende Erfindung betrifft insbesondere ein Konstruktionselement zur Isolierung und Klimatisierung von bestehenden Gebäuden.

Gebäude sind sehr stark wechselnden Klimabedingungen unterworfen. Es kann windstill oder stürmisch, bewölkt oder sonnig, heiß oder frostig sein. Will man mit möglichst einfachen Mitteln ein angenehmes Innenraumklima schaffen, müssen die klimatischen Einflüsse der Umwelt auf das Gebäude reguliert werden. Insbesondere der Fassade mit ihren oftmals großen Fensterflächen als Schnittstelle zwischen Umwelt und Gebäude kommt hierbei eine besondere Funktion zu.

Klimatechnisch gesehen ist eine solche Fassade mit großen Fensterflächen sehr problematisch. Die Durchlässigkeit der Fensterflächen verursacht große Temperaturschwankungen, Hitze im Sommer und Kälte im Winter. Dies führt zu einem unbehaglichen Raumklima im Fassadenbereich, das sich mit Klimatechnik nur sehr schwer beheben lässt. Man ist daher dazu übergegangen, durch einen mehrschichtigen Fassadenaufbau im Bereich der Fensterflächen (Isolierverglasung und Sonnenschutz) die thermischen Eigenschaften von Gebäudefassaden zu verbessern. Darüber hinaus ist vorgeschlagen worden, den Zwischenraum zwischen den verschiedenen Schichten der Fassade zu be- bzw. entlüften, um die Schwankungen der Außentemperatur und der Sonneneinstrahlung zu neutralisieren. Hierzu wird vor der eigentlichen Fassade des Gebäudes, der sogenannten Innenfassade, eine zweite, äußere Glasfassade derart angebracht, dass zwischen Innenfassade und Außenfassade ein belüfteter Fassadenzwischenraum entsteht. Hierdurch erhält man eine sogenannte Klimafassade oder Abluftfassade, die den Einfluss der äußeren Klimabedingungen auf das Raumklima minimiert. Eine derartige Abluftfassade ist beispielsweise in der Patentanmeldung EP-A-1 172 496 beschrieben.

Während derartige Doppelhautfassaden bei Neubauten heute immer häufiger zum Einsatz kommen, ist deren Einsatz in der Sanierung von Gebäuden nicht immer möglich. Bei der Renovierung von Gebäuden ist in der Tat eine Veränderung der Gebäudefassade häufig nicht möglich, so dass eine zusätzliche Außenfassade nicht zum Einsatz kommen kann.

### Aufgabe der Erfindung

Aufgabe der vorliegenden Erfindung ist es folglich, eine alternative Möglichkeit insbesondere zur klimatechnischen Sanierung von Gebäuden vorzuschlagen.

### Allgemeine Beschreibung der Erfindung

Diese Aufgabe wird erfindungsgemäß gelöst durch ein Konstruktionselement nach Anspruch 1. Dieses Konstruktionselement zum Klimatisieren von Gebäuden umfasst ein Fenstermodul, das einer bestehenden Fensterfläche des Gebäudes derart zugeordnet werden kann, dass bezüglich der Fensterfläche eine zweite Gebäudehülle ausgebildet wird, wobei zwischen der Fensterfläche und dem Fenstermodul ein Zwischenraum ausgebildet wird, und mindestens eine Klimatisierungsvorrichtung zum Beheizen und/oder Kühlen des zwischen der Fensterfläche und dem Fenstermodul ausgebildeten Zwischenraums. Erfindungsgemäß ist das Fenstermodul als Rahmenelement ausgestaltet, das einer Fensternische des Gebäudes von innen zugeordnet werden kann, und die Klimatisierungsvorrichtung ist in dem Rahmenelement angeordnet.

Es ist anzumerken, dass der Begriff "Klimatisieren" im Zusammenhang mit der vorliegenden Erfindung in seiner allgemeinsten Bedeutung zu verstehen ist. Dies bedeutet, dass unter dem Begriff "Klimatisieren" das Heizen und/oder das Kühlen und/oder das Be- oder Entfeuchten der Raumluft bzw. jede beliebige Kombination dieser Maßnahmen zu verstehen ist.

Das Konstruktionselement der vorliegenden Erfindung ermöglicht eine klimatechnische Sanierung von Gebäuden, ohne die Außenfassade des Gebäudes zu verändern. In der Tat ist das vorgeschlagene Konstruktionselement als Rahmenelement ausgestaltet, das einem bestehenden Fensterbereich des Gebäudes von innen zugeordnet wird. Die ursprüngliche Fassade des Gebäudes wird demnach von außen nicht beeinträchtigt. Von innen ist nach der Montage des Konstruktionselements im wesentlichen das Fenstermodul sichtbar. Dieses umfasst vorzugsweise ein in einem Wandpaneel angeordnetes Glaselement, das in Form und Größe dem bestehenden Fenster angepasst ist. Das Wandpaneel kann durch seine Materialwahl und Formgebung in geeigneter Weise an den gewünschten Styl des zu renovierenden Raums bzw. an die existierende Innenraumarchitektur angepasst werden, während durch das Glaselement von innen eine freie Durchsicht gewährleistet ist.

Durch die Montage des Rahmenelements an der bestehenden Fensternische wird im Bereich der bestehenden Fensterfläche eine zusätzliche Innenfassade geschaffen, die als zweite Gebäudehaut wirkt und eine Verbesserung des Raumklimas in dem dahinterliegenden Raum ermöglicht. In dem Zwischenraum zwischen der bestehenden Fensterfläche und dem Fenstermodul des Konstruktionselements entsteht dabei eine Klimazone, die zur Erzeugung eines gewünschten Raumklimas mittels der Klimatisierungsvorrichtung entsprechend temperiert wird. Durch die integrierte Klimatisierungsvorrichtung eignet sich das vorliegende Konstruktionselement demnach besonders gut für die Sanierung von Gebäuden, bei der die vorhandene Heiz- bzw. Kühleinrichtung ersetzt wird.

Es ist anzumerken, dass die Klimatisierung des Zwischenraums zwischen dem bestehenden Fensterelement und dem vorliegenden Konstruktionselement es erlaubt, die klimatischen Einflüsse der Umwelt auf das Gebäude dort zu regulieren, wo die Probleme normalerweise entstehen. Die Anordnung des vorgeschlagenen Konstruktionselements hinter der bestehenden Fensterfassade bewirkt in der Tat, dass die Raumkühllast im Sommer bzw. der Wärmebedarf im Winter dort reguliert werden kann, wo der Austausch der Enregien normalerweise am größten ist. So kann beispielsweise eine Überhitzung des Raumes durch starke Sonneneinstrahlung verringert werden, wenn die Luft innerhalb des Zwischenraumes entsprechend heruntergekühlt wird wobei Wärme über das erwärmte Kühlmedium abgeführt wird. Das zu kühlende Luftvolumen ist dabei vergleichsweise gering, so dass eine Regulierung des Raumklimas mit vergleichsweise geringer Leistung erreicht werden kann. Im Gegenzug wird im Heizfall die gegebenenfalls eingestrahlte Wärme nicht einfach abgeführt sondern kann zur Raumheizung mit benutzt werden, so dass ein passiver Wärmegewinn resultiert.

Weiterhin ist zu bemerken, dass das vorliegende Konstruktionselement als vorgefertigtes Bauteil ausgestaltet ist, das in dem zu sanierenden Gebäude mit geringem baulichen Aufwand schnell montiert werden kann. Eine Sanierung des Gebäudes kann somit mit vergleichsweise geringem Aufwand erfolgen, wobei die entsprechenden Arbeiten sich gegebenenfalls jeweils auf einen einzelnen Raum beschränken können. Es wird somit möglich, die entsprechenden Sanierungsarbeiten auf einen oder mehrere Räume zu beschränken, so dass ein Gebäude im laufenden Betrieb renoviert werden kann. Darüber hinaus handelt es sich bei dem vorgeschlagenen Konstruktionselement um ein verhältnismäßig kleine Einheiten, deren Montage keine speziellen Bauhilfen, wie z.B. einen Kran oder dergleichen, erfordern.

Dem Fachmann wird deutlich werden, dass der Einsatz des vorgeschlagenen Konstruktionselements mit anderen weithin bekannten Maßnahmen zur Sanierung bzw. Abdichtung der bestehenden Fassade einher gehen kann. Die Montage der Konstruktionselemente kann in geeigneter Weise von innen an der bestehenden Fassade oder an der Decke des Raumes erfolgen. Denkbar ist auch eine Ausgestaltung, bei der das Konstruktionselement in der Fensternische selbst angeordnet und montiert wird. Die für den Betrieb der Klimatisierungsvorrichtung notwendigen Zuleitungen werden dabei vorzugsweise in der Zimmerdecke oder in dem Fußboden verlegt.

In einer bevorzugten Ausgestaltung umfasst die Klimatisierungsvorrichtung mindestens einen Konvektor, der mit einem geeigneten Heiz- bzw. Kühlmedium beaufschlagbar ist. Konvektoren erlauben vorteilhaft eine Regulierung des Raumklimas ohne große Luftbewegungen, so dass Zuglufterscheinungen nicht auftreten. Durch die Temperierung der Raumluft entsteht lediglich eine leichte natürliche Luftzirkulation, die einem angenehmen Raumklima nicht entgegensteht.

Im Betrieb wird der oder die Konvektoren mit einem geeigneten Heiz- bzw. Kühlmedium beaufschlagt. Hierbei handelt es sich in der Regel um Heißwasser für den Heizbetrieb bzw. Kaltwasser für den Kühlbetrieb. Die Versorgung mit dem notwendigen Betriebsmedium kann dabei gegebenenfalls über vorhandene Heizungsrohre erfolgen.

Die Versorgung der Konvektoren kann selbstverständlich mit Heiß- bzw. Kaltwasser unter Standardtemperaturen betrieben werden. Da die Regulierung des Raumklimas in der Klimazone zwischen dem bestehenden Fenster und dem Konstruktionselement sehr effektiv erfolgt, kann der Konvektor jedoch im Heizfall mit relativ geringer Temperatur, d.h. unterhalb der Standardtemperatur für Heißwasser betrieben werden bzw. im Kühlfall mit einem Kühlmittel mit verhältnismäßig hoher Temperatur, d.h. mit einer Temperatur oberhalb der Standardtemperatur für Kühlwasser. Im Heizfall kann der Konvektor beispielsweise mit Heißwasser bei einer Temperatur von 35°C - 45°C betrieben werden, während im Kühlfall Kühlwasser bei einer Temperatur von beispielsweise 18°C bis 20°C beaufschlagt wird. Durch diese moderaten Temperaturen ist ein sehr energiesparender Betrieb der Klimatisierungsvorrichtung möglich, da der Aufwand sowohl für das Heizen als auch für das Kühlen des Betriebsmediums entsprechend gering ist. Darüber hinaus kann aufgrund der moderaten Temperaturen auf eine aufwendige Dämmung der Zuleitungen verzichtet werden.

In einer möglichen Ausgestaltung der Erfindung umfasst die Klimatisierungsvorrichtung zwei Konvektoren, wobei ein erster Konvektor mit einem geeigneten Kühlmedium beaufschlagbar ist und wobei ein zweiter Konvektor mit einem geeigneten Heizmedium beaufschlagbar ist. In diesem Fall ist je nach Betriebsmodus lediglich einer der Konvektoren in Betrieb.

Um die wirksame Leistung der Klimatisierungsvorrichtung zu optimieren, umfasst diese in einer bevorzugten Ausgestaltung der Erfindung zwei Konvektoren, die je nach Betriebsart, jeweils beide mit einem heiz- bzw. Kühlmedium beaufschlagt werden. In diesem Fall ist ein erster Konvektor vorzugsweise oberhalb eines Glaselements des Fenstermoduls und ein zweiter Konvektor unfierhalb eines Glaselerments des Fenstermoduls jeweils hinter dem Wandpaneel angeordnet.

Der Fachmann wird bemerken, dass bei dieser Ausgestaltung der Erfindung, die beiden Konvektoren beispielsweise parallel mit einem Betriebsmedium beaufschlagt werden können. In einer bevorzugten Ausgestaltung sind der erste und zweite Konvektor jedoch in Serie geschaltet, so dass bei der Montage die zahl der anzuschließenden Verbindungen minimal ist. In der Tat können die beiden Konvektoren in diesem Fall bereits ab Werk miteinander verbunden sein, so dass bei der Montage lediglich die in Serie geschaltete Einheit an die entsprechenden Zuleitungen für das Betriebsmedium angeschlossen werden müssen.

Die Zuführung des je nach Betriebsart der Klimatisierungsvorrichtung unterschiedlichen benötigten Betriebsmediums kann in einer möglichen Ausführung für jedes Betriebsmittel eine unterschiedliche Zuleitung vorhanden sein. In diesem Fall weist jeder Konvektor jeweils einen ersten Anschluss zum Anschließen einer ersten Zuleitung für ein Heizmedium und einen zweiten Anschluss zum Anschließen einer zweiten Zuleitung für ein Kühlmedium auf.

In einer bevorzugten Ausgestaltung werden die Konvektoren jedoch über eine gemeinsame Zuleitung mit dem je nach Betriebsart unterschiedlichen Betriebsmedium beaufschlagt. In dieser Ausgestaltung weist jeder Konvektor einen Anschluss zum Anschließen einer gemeinsamen Zuleitung für Heiz- und/oder Kühlmedium auf. Die Umschaltung zwischen Heiz- und Kühlbetrieb erfolgt dann vorzugsweise durch einen zentralen Umschalter für Heiss- und Kühlwasser.

Zur individuellen Temperaturregelung ist jedem Konstruktionselement vorzugsweise ein Regelventil in der Zuleitung für das jeweilige Betriebsmittel zugeordnet. Dieses Regelventil kann je nach Ausgestaltung in dem Konstruktionselement integriert sein oder beispielsweise in einer Zwischendecke des Raumes angeordnet sein. Die Temperaturregelung kann dabei je nach Anforderung als Einzelraumregelung oder als Zonenregelung wie z.B. Etagenregelung ausgestaltet sein.

Um eine ausreichende Luftzirkulation von der zwischen der bestehenden Fensterfläche und dem Konstruktionselement ausgebildeten Klimazone in den angrenzenden Raum zu ermöglichen weist das Rahmenelement mindestens eine Lüftungsöffnung auf, durch die ein Luftaustausch zwischen dem zu klimatisierenden Raum und dem Zwischenraum ermöglicht wird. In der Regel werden dabei zwei Lüftungsöffnungen vorgesehen, von denen eine im oberen Bereich und eine im unteren Bereich des Rahmenelements angeordnet ist, so dass eine Luftzirkulation durch den Zwischenraum entsteht.

Es ist anzumerken, dass die Luftzirkulation je nach Betriebsart der Klimatisierungsvorrichtung eine unterschiedliche Richtung aufweist. So wird die natürliche Luftbewegung im Heizbetrieb in dem Zwischenraum von unten nach oben verlaufen. Die erwärmte Luft tritt dann durch die Lüftungsöffnung im oberen Bereich des Konstruktionselements in den angrenzenden Raum aus, kühlt sich langsam wieder ab um im hinteren Bereich des Raumes wieder nach unten zu sinken und tritt durch die untere Lüftungsöffnung erneut in den Zwischenraum ein. Im Kühlbetrieb kehrt sich diese Luftzirkulation um, wobei die Luft in dem Zwischenraum von oben nach unten und in dem angrenzenden Raum von unten nach oben zirkuliert.

Um ein Einbringen von Außenluft in den Raum zu ermöglichen, umfasst das Konstruktionselement vorzugsweise einen Quellluftauslass zum Einbringen von aufbereiteter Außenluft in den zwischen der Fensterfläche und dem Fenstermodul ausgebildeten Zwischenraum. Dieser Quellluftauslass weist beispielsweise ein gelochtes Rohr mit einem innenliegenden Vlies auf, das vorzugsweise im unteren Bereich des Rahmenelements an diesem angeordnet ist. Es ist anzumerken, dass die Zahl der Ausströmöffnungen in dem gelochten Rohr entsprechend hoch sein soll, so dass die Ausströmgeschwindigkeit der Außenluft niedrig sein kann. Hierdurch wird eine ungewollte Luftströmung wirksam verhindert. Weiterhin ist zu bemerken, dass in dem rückwärtigen Bereich des Raumes gegebenenfalls eine Abzugsvorrichtung für verbrauchte Raumluft angeordnet ist. Durch diese kann verbrauchte Raumluft aus dem Raum abgesogen werden, die dann über den Quellluftauslass durch aufbereitete Außenluft ersetzt wird.

Der Fachmann wird bemerken, dass es für Wartungsarbeiten vorteilhaft ist, wenn das Konstruktionselement derart ausgestaltet ist, dass mindestens eine Zugangsöffnung in den zwischen der Fensterfläche und dem Fenstermodul ausgebildeten Zwischenraum vorhanden ist. Dies kann beispielsweise dadurch verwirklicht sein, dass das Rahmenelement zwischen einer Schließstellung und einer Offenstellung schwenkbar an der bestehenden Fassade montiert ist. Alternativ kann auch das Fenstermodul in dem Rahmenelement schwenkbar angeordnet sein, so dass das Fenstermodul, d.h. das Wandpaneel mit dem Glaselement, bezüglich des Rahmens zu öffnen ist. In einer anderen möglichen Variante ist das Glaselement derart in das Wandpaneel eingesetzt, dass das Glaselement in dem Fenstermodul geöffnet werden kann. Weiterhin kann gegebenenfalls eine weitere Klappe in dem Wandpaneel des Fenstermoduls angebracht sein.

Es beleibt anzumerken, dass bei der Sanierung breiter Fensterflächen in der Regel mehrere der vorgeschlagenen Konstruktionselemente nebeneinander montiert werden. In diesem Fall können nebeneinander zu montierende Konstruktionselemente je nach Bedarf individuell an die Betriebsmittelversorgung angeschlossen werden oder alternativ untereinander in Serie geschaltet und über einen gemeinsamen Anschluss mit dem entsprechenden Betriebsmedium beaufschlagt werden.

Zusammenfassend kann festgehalten werden, dass durch die vorliegende Erfindung die Raumkühllast im Sommer bzw., der Wärmebedarf im Winter vorteilhaft dort reguliert werden kann, wo der Austausch der Energien normalerweise am größten ist. Der Austausch erfolgt mittels statischer Konvektoren, so dass kein Gebläse zur Erzeugung der Kühl- oder Heizleistung erforderlich ist. Die Erwärmung bzw. die Kühlung der Räumer vollzieht sich dementsprechend vollkommen geräuschlos und ohne Zugerscheinungen. Da das Konstruktionselement ohne Gebläse oder dergleichen auskommt und auch ansonsten keine wartungsintensiven Bauteile aufweist, ist die Wartung der vorgeschlagenen Konstruktionselemente darüber hinaus sehr einfach und kostengünstig

### Detaillierte Beschreibung anhand der Figuren

Im folgenden wird eine Ausgestaltung der Erfindung anhand der beiliegenden Figuren beschrieben. Es zeigen:
Fig.1: eine Frontansicht eines Konstruktionselementes zum Klimatisieren von Gebäuden;
Fig.2: ein montiertes Konstruktionselement im Kühlbetrieb;
Fig.3: ein montiertes Konstruktionselement im Heizbetrieb.

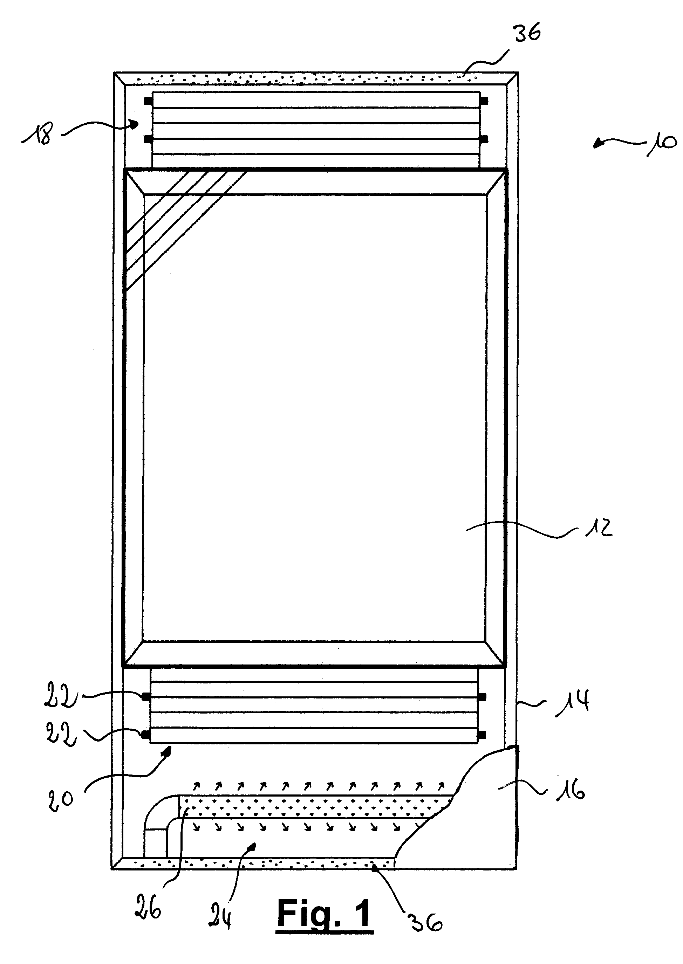

Die Fig. 1 zeigt eine Frontansicht einer Ausgestaltung eines Konstruktionselements, wobei das Wand paneel zur besseren Veranschaulichung größtenteils weggebrochen ist.

Das dargestellte Konstruktionselement 10 umfasst im wesentlichen ein Glaselement 12, d.h. eine Fensterscheibe, das in einem Rahmenelement 14 angeordnet ist. Oberhalb und unterhalb des Glaselements 12 ist das Rahmenelement auf der Vorderseite mit Paneelen 16 aus einem geeigneten Material verkleidet. Das Paneel, beispielsweise aus Aluminium, kann durch seine Materialwahl und Formgebung in geeigneter Weise an den gewünschten Styl des zu renovierenden Raums angepasst werden.

Oberhalb und unterhalb des Gaselements 12 ist jeweils ein Konvektor 18 und 20 in dem Rahmenelement montiert. Diese Konvektoren 18 und 20 werden im Betrieb über Zuleitungen mit einem Betriebsmedium, z.H. Heiß- oder Kühlwasser, beaufschlagt. Die notwendigen Zuleitungen werden hierzu an entsprechende Anschlüsse 22 der Konvektoren angeschlossen.

Im unteren Bereich des Rahmenelements 14 ist ein Quellluftauslass 24 zum Einbringen von aufbereiteter Außenluft angeordnet. Dieser Quellluftauslass weist beispielsweise ein an eine Luftaufbereitungsanlage angeschlossenes gelochtes Rohr 26 mit einem innenliegenden Vlies auf, das im unteren Bereich des Rahmenelements 14 an diesem angeordnet ist.

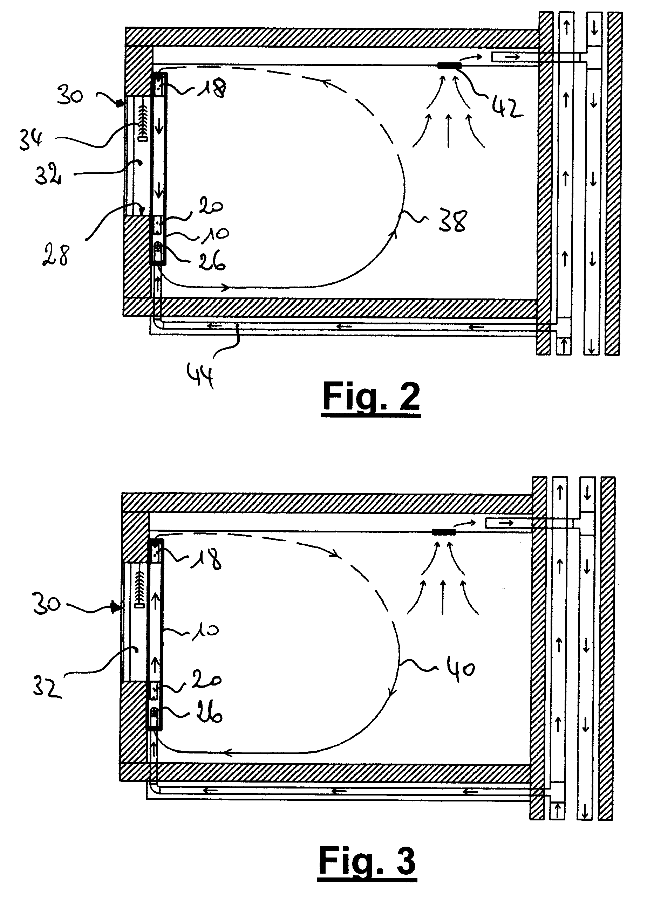

Das Rahmenelement 14 ist derart ausgestaltet dass es an oder in der Fensternische 28 eines bestehenden Fensters 30 montiert werden kann (siehe Fig. 2 und 3). Hierdurch wird im Bereich der bestehenden Fensterfläche eine zusätzliche Innenfassade geschaffen, die als zweite Gebäudehaut wirkt und eine Verbesserung des Raumklimas in dem dahinterliegenden Raum ermöglicht. In dem Zwischenraum 32 zwischen der bestehenden Fensterfläche 30 und dem Konstruktionselement 10 entsteht dabei eine Klimazone, die zur Erzeugung eines gewünschten Raumklimas mittels der Konvektoren 18 und 20 entsprechend temperiert wird. Die Klimatisierung des Zwischenraums zwischen dem bestehenden Fensterelement 30 und dem Konstruktionselement 10 erlaubt es, die klimatischen Einflüsse der Umwelt auf das Gebäude dort zu regulieren, wo die Probleme normalerweise entstehen. So kann beispielsweise eine Überhitzung des Raumes durch starke Sonneneinstrahlung reduziert werden, wenn die Luft innerhalb des Zwischenraumes 32 entsprechend heruntergekühlt wird. Das zu kühlende Luftvolumen ist dabei vergleichsweise gering, so dass eine Regulierung des Raumklimas mit vergleichsweise geringer Leistung erreicht werden kann. Darüber hinaus kann gegebenenfalls zusätzlich eine ein mechanischer Sonnenschutz 34, z.B. ein Lamellenstore oder eine Jalousie, vorgesehen sein

Durch die Klimatisierung der Luft in dem Zwischenraum entsteht eine natürliche Luftbewegung, die im Heizbetrieb in dem Zwischenraum nach oben und im Kühlbetrieb nach unten gerichtet ist. Weist das Konstruktionselement Lüftungsöffnungen auf, entsteht durch diese Luftbewegung eine Luftzirkulation von der zwischen der bestehenden Fensterfläche und dem Konstruktionselement ausgebildeten Klimazone in den angrenzenden Raum. In der Regel werden dabei zwei Bereiche 36 mit Lüftungsöffnungen vorgesehen, von denen einer im oberen Bereich und eine im unteren Bereich des Rahmenelements angeordnet ist, so dass eine Luftzirkulation durch den Zwischenraum 32 entsteht.

Je nach Betriebsart weist die entstehende Luftzirkulation eine unterschiedliche Richtung auf. So wird die natürliche Luftbewegung im Kühlbetrieb in dem Zwischenraum 32 von oben nach unten verlaufen (siehe Fig. 2). Die abgekühlte Luft tritt dann durch die Lüftungsöffnungen 36 im unteren Bereich des Konstruktionselements 10 in den angrenzenden Raum aus wo sie sich langsam wieder erwärmt um im hinteren Bereich des Raumes wieder nach oben zu steigen und durch die oberen Lüftungsöffnungen erneut in den Zwischenraum 32 einzutreten. Diese Luftzirkulation ist in Fig. 2 durch die Linie 38 schematisch dargestellt.

In dem in der Fig. 3 dargestellten Heizbetrieb kehrt sich diese Luftzirkulation um, wobei der Luftstrom in dem Zwischenraum 32 von unten nach oben und in dem angrenzenden Raum von oben nach unten gerichtet ist 40.

Um verbrauchte Raumluft absaugen zu können, ist in dem Raum vorteilhaft eine Abzugsvorrichtung 42 für verbrauchte Raumluft angeordnet. Durch diese kann verbrauchte Raumluft aus dem Raum abgesogen werden, die dann über den Quellluftauslass 26 durch aufbereitete Außenluft ersetzt wird. Die Abzugsvorrichtung 42 ist beispielsweise wie in Fig. 2 und 3 gezeigt in dem rückwärtigen Bereich des Raumes im Deckenbereich, beispielsweise an der Decke oder in einer Zwischendeckedecke, montiert.

Es bleibt anzumerken, dass die für den Betrieb der Konvektoren 18 und 22 notwendigen Zuleitungen 44 in der Hilfsdecke oder, wie in den Figuren 2 und 3 gezeigt, in oder an dem Fußboden verlegt sein können.

Es ist weiter anzumerken, dass bei der Sanierung breiter Fensterflächen in der Regel mehrere der vorgeschlagenen Konstruktionselemente nebeneinander montiert werden. In diesem Fall können nebeneinander zu montierende Konstruktionselemente je nach Bedarf individuell an die Betriebsmittelversorgung angeschlossen werden oder alternativ untereinander in Serie geschaltet und über einen gemeinsamen Anschluss mit dem entsprechenden Betriebsmedium beaufschlagt werden.

### Referenzzeichenliste

- 10: Konstruktionselement
- 12: Glaselement
- 14: Rahmenelement
- 16: Paneelen
- 18, 20: Konvektoren
- 22: Anschlüsse
- 24: Quellluftauslass
- 26: gelochtes Rohr
- 28: Fensternische
- 30: Fensters
- 32: Zwischenraum
- 34: mechanischer Sonnenschutz
- 36: Lüftungsöffnungen
- 38: Luftzirkulation im Kühlbetrieb
- 40: Luftzirkulation im Heizbetrieb
- 42: Abzugsvorrichtung
- 44: Zuleitungen

## Patentansprüche

1. Konstruktionselement zum Klimatisieren von Gebäuden, umfassend ein Fenstermodul, das einer Fensterfläche des Gebäudes derart zugeordnet werden kann, dass bezüglich der Fensterfläche eine zweite Gebäudehülle ausgebildet wird, wobei zwischen der Fensterfläche und dem Fenstermodul ein Zwischenraum ausgebildet wird, und
mindestens eine Klimatisierungsvorrichtung zum Beheizen und/oder Kühlen des zwischen der Fensterfläche und dem Fenstermodul ausgebildeten Zwischenraums,
**dadurch gekennzeichnet, dass** das Fenstermodul als Rahmenelement ausgestaltet ist, das einer Fensternische des Gebäudes von innen zurrgeordnet werden kann, und dass die Klimatisierungsvorrichtung in dem Rahmenelement angeordnet ist.

2. Konstruktionselement nach Anspruch 1, wobei die Klimatisierungsvorrichtung mindestens einen Konvektor umfasst, der mit einem geeigneten Heiz- bzw. Kühlmedium beaufschlagbar ist.

3. Konstruktionselement nach einem der Ansprüche 1 oder 2, wobei die Klimatisierungsvorrichtung zwei Konvektoren umfasst, wobei ein erster Konvektor mit einem geeigneten Kühlmedium beaufschlagbar ist und wobei ein zweiter Konvektor mit einem geeigneten Heizmedium beaufschlagbar ist.

4. Konstruktionselement nach einem der Ansprüche 1 oder 2, wobei die Klimatisierungsvorrichtung zwei Konvektoren umfasst, wobei ein erster Konvektor oberhalb eines Glaselements des Fenstermoduls angeordnet ist und wobei ein zweiter Konvektor unterhalb eines Glaselements des Fenstermoduls angeordnet ist.

5. Konstruktionselement nach Anspruch 4, wobei der erste und zweite Konvektor in Serie geschaltet sind.

6. Konstruktionselement nach einem der vorhergehenden Ansprüche, wobei jeder Konvektor einen Anschluss zum Anschließen einer gemeinsamen Zuleitung für Heiz und/oder Kühlmedium aufweist.

7. Konstruktionselement nach einem der vorhergehenden Ansprüche, wobei jeder Konvektor jeweils einen ersten Anschluss zum Anschließen einer ersten Zuleitung für ein Heizmedium und einen zweiten Anschluss zum Anschließen einer zweiten Zuleitung für ein Kühlmedium aufweist.

8. Konstruktionselement nach einem der vorhergehenden Ansprüche, wobei das Rahmenelement mindestens eine Lüftungsöffnung aufweist, durch die ein Luftaustausch zwischen dem zu klimatisierenden Raum und dem zwischen der Fensterfläche und dem Fenstermodul ausgebildeten Zwischenraum ermöglicht wird.

9. Konstruktionselement nach einem der vorhergehenden Ansprüche, umfassend einen Quellluftauslass zum Einbringen von aufbereiteter Außenluft in den zwischen der Fensterfläche und dem Fenstermodul ausgebildeten Zwischenraum.

10. Konstruktionselement nach Anspruch 9, wobei der Quellluftauslass im unteren Bereich des Rahmenelements an diesem angeordnet ist.

11. Konstruktionselement nach einem der vorhergehenden Ansprüche, wobei mindestens eine Zugangsöffnung in den zwischen der Fensterfläche und dem Fenstermodul ausgebildeten Zwischenraum vorhanden ist.
